(19) Europäisches Patentamt / European Patent Office / Office européen des brevets

(11) **EP 2 021 217 B1**

(12) **FASCICULE DE BREVET EUROPEEN**

(45) Date de publication et mention de la délivrance du brevet:
**09.12.2015 Bulletin 2015/50**

(21) Numéro de dépôt: **07766104.9**

(22) Date de dépôt: **29.05.2007**

(51) Int Cl.:
*B60T 8/1755* (2006.01)    *B60W 30/02* (2012.01)
*B60W 10/04* (2006.01)

(86) Numéro de dépôt international:
**PCT/FR2007/051336**

(87) Numéro de publication internationale:
**WO 2007/138221 (06.12.2007 Gazette 2007/49)**

(54) **DISPOSITIF DE CONTROLE DE L'ENTRAINEMENT D'UN VEHICULE AUTOMOBILE**

VORRICHTUNG ZUR STEUERUNG EINES FAHRZEUGANTRIEBS

DEVICE FOR CONTROLLING THE DRIVING OF AN AUTOMOBILE

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **31.05.2006 FR 0651967**

(43) Date de publication de la demande:
**11.02.2009 Bulletin 2009/07**

(73) Titulaire: **Renault SAS**
**92100 Boulogne Billancourt (FR)**

(72) Inventeurs:
- **CAYOL, Olivier**
  **F-78000 Versailles (FR)**
- **CLAEYS, Xavier**
  **F-75012 Paris (FR)**
- **POGNANT-GROS, Philippe**
  **F-92500 Rueil-malmaison (FR)**
- **POTHIN, Richard**
  **F-78760 Jouars-pontchartrain (FR)**

(56) Documents cités:
EP-A- 1 486 391          EP-A2- 1 197 409
DE-A1- 19 523 354        US-A1- 2002 153 770
US-A1- 2004 176 899

**Description**

La présente invention concerne un dispositif de contrôle de l'entraînement d'un véhicule automobile, notamment un dispositif de contrôle de l'entraînement d'un véhicule automobile à partir d'une consigne de traction émanant par exemple d'un conducteur de ce véhicule.

L'invention permet de contrôler les techniques de répartition du couple de traction et de la stabilité des véhicules automobiles.

Dans l'état de la technique, il est connu un tel dispositif qui comporte des moyens pour traduire la consigne d'entraînement du conducteur en consignes d'entraînement réparties sur les roues de façon à toujours satisfaire un niveau d'adhérence déterminé sur les pneumatiques (voir par exemple EP 1 486 391 A, EP 1 197 409 A2 et DE 195 23 354 A1).

Une telle stratégie de répartition des efforts aux roues du véhicule tient compte de l'estimation de la charge verticale appliquée à chaque roue et de l'estimation du potentiel de traction utilisé par chaque roue, qui se définit par le rapport de l'effort longitudinal sur l'effort vertical.

En ligne droite, cette stratégie se réduit à l'exploitation d'une parabole d'équiadhérence longitudinale et transversale connue de l'état de la technique. En utilisant une telle stratégie lors d'un virage, le report de charge latéral a tendance à créer un moment de lacet qui peut déstabiliser le véhicule. Cet état de la technique n'apporte donc pas une solution satisfaisante au contrôle de l'entraînement du véhicule, sous des conditions correctes de stabilité en virage. C'est pourquoi la stratégie de répartition ne suffit plus pour imposer un couple de traction plus important sur les roues intérieures au virage que sur les roues extérieures, ce qui crée un moment de lacet s'opposant au survirage naturel provoqué par le délestage du train arrière.

Dans d'autres situations d'entraînement du véhicule, la dissymétrie de freinage entre les roues extérieures et intérieures crée un moment de lacet stabilisateur qui permet de rester plus longtemps sur la trajectoire dans les freinages en courbe au lieu de la tendance naturelle du véhicule à survirer. Cependant, certains châssis présentent un caractère plus sous-vireur que d'autres châssis. Dans des situations de freinage en courbe, ces châssis ont peu tendance à rentrer à l'intérieur de la courbe. Le moment de lacet créé par la répartition pourrait donc à l'inverse amener le véhicule à l'extérieur de la trajectoire en début de freinage. Pour ces véhicules, cette situation d'instabilité pourrait donc perturber le conducteur. Cela pourrait être également le cas pour un véhicule à pleine charge.

La présente invention apporte remède à cet état de la technique en fournissant un dispositif de contrôle de l'entraînement d'un véhicule automobile caractérisé en ce qu'il comporte :

- des moyens pour estimer une condition de couple et/ou d'effort de traction par exécution d'un modèle dynamique de liaison au sol ;
- des moyens pour estimer une condition limite de couple et/ou d'effort de traction dans un état de virage comportant un moyen pour calculer un moment de lacet maximal autorisé déterminé en fonction de la situation de conduite, sur la base des données dynamiques du véhicule et de la volonté du conducteur; et des moyens pour limiter un couple et/ou effort de traction entre plusieurs roues du véhicule en fonction de la condition estimée par les moyens pour estimer une condition de couple et/ou d'effort de traction et de la condition limite élaborée par les moyens pour estimer une condition limite de couple et/ou d'effort de traction dans un état de virage.

La stabilité est ainsi améliorée dans les phases critiques de forte accélération transversale et faible décélération longitudinale.

Selon d'autres caractéristiques de l'invention :

- les moyens pour estimer une condition de couple de traction comportent un moyen pour estimer des efforts verticaux en tenant compte de la charge statique, de l'accélération tangentielle, et de l'accélération centripète ;
- les moyens pour estimer une condition de couple de traction comportent un moyen, pour calculer des valeurs optimales d'efforts longitudinaux de traction des roues du véhicule telles que :

  - pour chaque roue, un potentiel de traction, défini par le rapport d'un effort longitudinal sur un effort vertical est égal à un potentiel de traction voisin de celui des quatre roues, multiplié par un coefficient proche de un qui permet de régler une petite différence de potentiels entre les roues intérieures et les roues extérieures dans un virage et entre les roues avant et arrière de façon à assurer que les roues avant patineront avant les roues arrières et que les roues intérieures patineront avant les roues extérieures ;
  - l'effort de traction total est égal à la demande du conducteur ;

- les moyens pour estimer une condition de commande comporte un moyen pour calculer des efforts longitudinaux limités en fonction du moment de lacet maximal autorisé et de coefficients limitatifs de manière modifier la répartition des efforts de traction appliqués à chaque roue en diminuant l'asymétrie entre les efforts de traction des roues intérieures et extérieures, et/ou avant et arrière, lors d'une prise de virage ;

- les moyens pour répartir les couples ou efforts de traction limités aux roues du véhicule coopèrent avec des moteurs électriques solidaires de chaque roue, apte à entraîner chaque roue en respectant la consigne d'effort ;
- les moyens pour répartir les couples ou efforts de traction limités aux roues du véhicule coopèrent avec un différentiel piloté équipant chaque train du véhicule et qui est apte à distribuer les consignes à la roue droite et à la roue gauche du train donné ;
- le dispositif s'applique à un véhicule hybride à quatre roues motrices comportant au moins un moteur thermique entraînant un train avant du véhicule et au moins une machine électrique entraînant le train arrière du véhicule et pouvant fonctionner soit en moteur soit en générateur pour recharger un élément de stockage d'énergie.

D'autres caractéristiques et avantages de l'invention apparaîtront à la lecture de la description détaillée qui suit pour la compréhension de laquelle on se reportera aux dessins annexés dans lesquels :

- la figure 1 est un schéma simplifié représentant le dispositif de répartition de l'invention implanté dans un véhicule hybride à quatre roues motrices ; et
- la figure 2 est un schéma bloc illustrant le dispositif de répartition de l'invention.

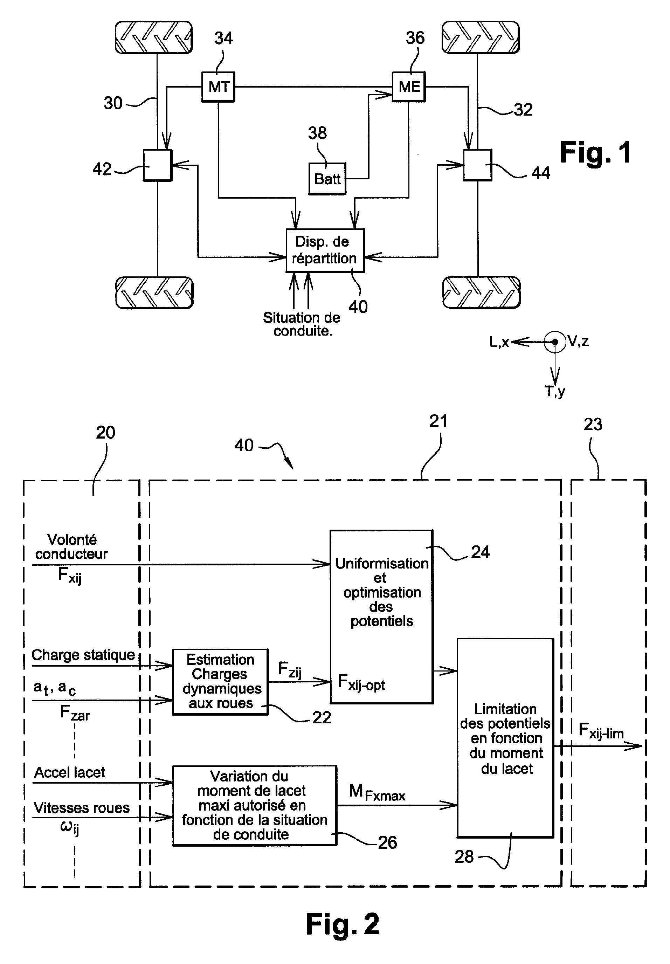

Dans la description qui va suivre, on emploiera la terminologie longitudinale, verticale et transversale (ou latérale) et les indices x, y et z en se référant au trièdre L, V, T représenté à la figure 1.

Dans la description suivante, des éléments identiques, analogues ou similaires seront désignés par les mêmes chiffres de référence.

Les modes de réalisations seront décrits de façon totalement formelle en utilisant les conventions d'écriture suivantes :

$a_t$       accélération tangentielle ;

$a_c$       accélération centripète ;

$F_{Xij}$       force longitudinale à la roue ij : projection de la réaction du sol sur la roue selon l'axe longitudinal de la roue ;

$F_{Zij}$       force verticale à la roue ij : projection de la réaction du sol sur la roue selon l'axe vertical de la roue ;

$$\mu_X = \frac{F_X}{F_Z}$$       potentiel de freinage en négligeant les efforts latéraux ;

$M$       sans indice masse du véhicule, indicée 1 masse sur le train avant, indicée 2 masse sur le train arrière ;

$L$       empattement ;

$L_1, L_2$       distance du centre de gravité aux trains avant et arrière ;

$K_1, K_2$       paramètres du véhicule donnant la répartition des reports de charge longitudinaux entre l'avant et l'arrière ;

$b_1, b_2$       voie avant et arrière ;

i,j       indice des roues, le premier indice signifie avant/arrière, le second gauche/ droite. Par exemple 1,1 signifie roue avant gauche et 2,1 signifie roue arrière gauche.

Un véhicule hybride, représenté dans un mode particulier de réalisation de l'invention à la figure 1, comporte un moteur thermique 34 mécaniquement couplé aux roues motrices d'un train avant 30.

Le véhicule comporte aussi une machine électrique 36 pouvant fonctionner en moteur ou en générateur de courant et entraînant le train arrière 32, pour propulser le véhicule en mode quatre roues motrices.

Un élément de stockage d'énergie 38 comporte une batterie et des organes de contrôle de manière à respecter des conditions de sécurité et d'éviter une charge ou une décharge excessive de la batterie.

L'élément de stockage 38 alimente la machine électrique 36 en énergie.

Le moteur thermique 34 permet ainsi d'entraîner le véhicule hybride dans le cas où l'état de charge de l'élément de stockage 38 est faible, ou encore de recharger la batterie en faisant travailler la machine électrique 36 en mode génératrice de courant.

Un dispositif 40 de répartition des couples de traction comporte des moyens pour répartir les couples de traction des moteurs thermique 34 et/ou électrique 36 selon le mode de propulsion du véhicule hybride et conformément à la volonté du conducteur qui intervient, de manière connue, par l'intermédiaire d'organes d'actionnement comme par exemple une pédale d'accélérateur (non représentée).

Le dispositif 40 est connecté d'une part aux trains avant 30 et arrière 32 par l'intermédiaire de blocs avant et arrière 42 et 44 et d'autre part aux moteurs thermique 34 et électrique 36 de manière à répartir le couple fourni par le ou les moteurs aux quatre roues motrices du véhicule.

Le dispositif 40 reçoit aussi des informations sur la volonté du conducteur par l'intermédiaire d'organes d'actionnement comme par exemple le volant, et/ou les pédales de frein, d'accélérateur et d'embrayage qui permettent de définir une situation de conduite.

Le degré d'actionnement des différents organes d'actionnement est déterminé par exemple par un capteur d'angle de braquage pour le volant et des capteurs d'angle d'appui sur les pédales pour les pédales de frein, d'accélérateur et d'embrayage.

Les blocs avant et arrière, respectivement 42 et 44, comportent des moyens, comme par exemple des différentiels pilotés, pour transmettre les couples de traction calculés par le dispositif de répartition conformément aux enseignements de l'invention, à chacune des roues du train considéré réalisé par le dispositif 40.

Les blocs avant 42 et arrière 44 comportent aussi des moyens pour relever entre autres, les vitesses $\omega_{ij}$ et les accélérations pour chaque roue ij, nécessaires au calcul de la répartition des couples de traction.

Selon une variante non représentée de l'invention, la consigne de commande de traction pour chaque roue est appliquée au moyen de moteurs-roue solidaires de chacune des roues motrices du véhicule hybride remplaçant alors les différentiels pilotés.

Le dispositif de répartition 40, selon l'invention, est représenté plus en détails à la figure 2.

Le dispositif 40 comporte tout d'abord un bloc de collecte de signaux d'entrée 20, rassemblant des moyens pour collecter les signaux des capteurs de manière à relever des signaux correspondant à la volonté du conducteur, des signaux caractéristiques de la dynamique de chaque roue motrice ij ainsi que des signaux relatifs à la dynamique du véhicule.

Ces signaux sont transmis aux blocs de calcul suivants qui, ensemble, permettent de déterminer quatre valeurs de couple de traction ou d'efforts longitudinaux appliqués à chaque roue ij du véhicule en fonction de la situation de conduite de manière à garder un niveau d'adhérence équivalent sur les quatre pneumatiques en situation du virage.

Les signaux caractéristiques de la dynamique de chaque roue motrice sont transmis à un bloc 22 de calcul des charges dynamiques aux roues ij.

Le bloc 22 de calcul des charges dynamiques aux roues ij comporte des moyens pour calculer des efforts verticaux Fzij aux quatre roues, c'est-à-dire la projection sur l'axe vertical de la réaction au sol sur une roue ij.

Selon un modèle de calcul, les efforts verticaux Fzij sont calculés en tenant compte des reports de charge dynamiques longitudinaux et latéraux et de la charge statique. Plus particulièrement, les efforts verticaux Fzij, sont calculés selon un modèle dynamique prenant en compte la charge statique g, les accélérations tangentielles $a_t$ et centripète $a_c$.

La résolution du modèle dynamique aboutit aux équations A suivantes, qui donnent une valeur Fzij d'effort vertical pour chaque roue ij :

$$F_{Z11} = -\frac{K_1}{b_1}hMa_c - \frac{hMa_t}{2L} + \frac{L_2 Mg}{2L}$$

$$F_{Z12} = +\frac{K_1}{b_1}hMa_c - \frac{hMa_t}{2L} + \frac{L_2 Mg}{2L}$$

$$F_{Z21} = -\frac{K_2}{b_2}hMa_c + \frac{hMa_t}{2L} + \frac{L_1 Mg}{2L} \qquad (A).$$

$$F_{Z22} = +\frac{K_2}{b_2}hMa_c + \frac{hMa_t}{2L} + \frac{L_1 Mg}{2L}$$

Les signaux relatifs à la volonté du conducteur, comme l'angle de braquage du volant, etc., sont transmis à un bloc 24 pour calculer des valeurs optimales d'efforts longitudinaux Fxij_opt qui satisfont aux conditions d'uniformisation et d'optimisation.

Le bloc 24 qui comporte des moyens pour calculer des valeurs optimales d'efforts longitudinaux Fxij_opt pour les quatre roues motrices ij de manière à satisfaire aux conditions de roulage du véhicule et imposé par le conducteur et aux conditions d'adhérence au sol.

Plus précisément, la répartition doit satisfaire les objectifs suivants :

- pour chaque roue ij le potentiel de traction, défini par le rapport de l'effort longitudinal sur l'effort vertical, est égal à $\eta_{ij}\mu$ où $\mu$ est un potentiel de traction voisin de celui des quatre roues et $\eta_{ij}$ est un coefficient proche de un qui permet de régler une petite différence de potentiel entre les roues intérieures et les roues extérieures au virage et entre les roues avant et les roues arrière de façon à s'assurer que les roues avant patineront avant les roues arrières et que les roues intérieures patineront avant les roues extérieures ;

- et la traction totale doit être égale à une demande du conducteur $F_T$ calculée à partir des informations sur la volonté du conducteur.

Exprimée en terme mathématique, la répartition doit donc satisfaire les équations B suivantes :

$$F_{xij} = \eta_{ij} \mu F_{zij}$$
$$\sum F_{xij} = F_T \quad (B).$$

L'effort optimal Fxij_opt pour chaque roue ij s'exprime alors comme suit :

$$F_{xij\_opt} = F_T \frac{\eta_{ij} F_{zij}}{\sum \eta_{ij} F_{zij}} .$$

Les signaux relatifs à la dynamique du véhicule sont transmis à un bloc de calcul 26 du moment de lacet maximum autorisé $M_{Fxmax}$ en fonction de la situation de conduite, au-delà duquel la conduite est considérée comme instable et dangereuse.

Ce bloc de calcul 26 comporte des moyens pour calculer, à des intervalles de temps réguliers, un moment de lacet maximum autorisé $M_{Fxmax}$ en fonction de différents facteurs tels que, notamment, l'angle de braquage du volant, la vitesse et l'accélération de chaque roue, le potentiel de traction $\eta_{ij}\mu$ pour chaque roue ij, etc.

Les efforts longitudinaux aux quatre roues Fxi_opt, calculés précédemment, ainsi que le moment de lacet maximum autorisé $M_{Fxmax}$ sont transmis à un bloc 28 de limitation des efforts longitudinaux Fxij_opt.

Le bloc de limitation 28 comporte des moyens pour calculer des valeurs limites d'efforts longitudinaux Fxij_lim, à partir des efforts longitudinaux Fxij_opt, calculés par le bloc de calcul précédent 24, qui satisfont aux conditions dynamiques de roulage du véhicule hybride, précédemment déterminé par le moment de lacet maximum autorisé $M_{Fxmax}$.

En effet, l'optimisation des potentiels de traction, réalisée par le bloc précédent 24, conduit généralement à imposer un couple plus important aux roues extérieures au virage car elles sont plus chargées. L'optimisation des potentiels de traction $\eta_{ij}\mu$ est donc souvent à l'origine d'un moment de lacet $M_{FX}$ dû à l'asymétrie des forces de traction dans une situation de virage.

Ce moment de lacet $M_{FX}$ doit être contrôlé pour qu'il ne dépasse pas la valeur maximale $M_{Fxmax}$ au-delà de laquelle le comportement du véhicule est considérée comme perturbant pour le conducteur. Cette valeur peut varier selon la situation de conduite. Pour limiter le moment de lacet à une plage de valeurs acceptable, il n'y a pas d'autre solution que de diminuer l'asymétrie des forces entre les roues extérieures et intérieures au virage et entre les roues avant et arrière du véhicule. Cette diminution se traduit par une diminution des efforts de traction pour certaines roues et une augmentation pour les autres. Ainsi certains potentiels $\eta_{ij}\mu$ vont être améliorés et d'autre vont être dégradés.

La répartition initiale est donc modifiée en diminuant l'asymétrie des forces de traction. Cette diminution de l'asymétrie est répartie entre l'avant et l'arrière par un coefficient $\beta$. Un coefficient $\alpha$ est ajouté au calcul pour limiter le moment de lacet $M_{FX}$ à la valeur maximale autorisée $M_{Fxmax}$. Le coefficient $\beta$ est calculé de façon à limiter le plus possible la plus grande augmentation de potentiel.

On aboutit à des expressions C, d'efforts longitudinaux Fxij_lim pour les quatre roues limitées déduites d'un modèle connu et qui sont les suivantes :

$$F_{X11\lim} = F_{X11} + \frac{\alpha\beta}{2}$$

$$F_{X12\lim} = F_{X12} - \frac{\alpha\beta}{2}$$

$$F_{X21\lim} = F_{X21} + \frac{1}{2}\alpha\left(1 - \beta\frac{b_1}{b_2}\right) \quad (C).$$

$$F_{X22\lim} = F_{X22} - \frac{1}{2}\alpha\left(1 - \beta\frac{b_1}{b_2}\right)$$

Ainsi défini, le coefficient $\alpha$ permet de limiter le moment de lacet, comme le montre l'équation D suivante.

$$M_{FX\lim} = \frac{b_1}{2}\left(F_{X12\lim} - F_{X11\lim}\right) + \frac{b_2}{2}\left(F_{X22\lim} - F_{X21\lim}\right)$$

$$= \frac{b_1}{2}\left(F_{X12} - F_{X11} - \alpha\beta\right) + \frac{b_2}{2}\left(F_{X22} - F_{X21} - \alpha\left(1 - \beta\frac{b_1}{b_2}\right)\right) \quad \text{(D)}$$

$$= \underbrace{\frac{b_1}{2}\left(F_{X12} - F_{X11}\right) + \frac{b_2}{2}\left(F_{X22} - F_{X21}\right)}_{M_{FX}} - \frac{b_2}{2}\alpha$$

**Revendications**

1.  Dispositif de répartition (40) d'un couple de traction et/ou d'un effort de traction sur des roues d'un véhicule automobile, du type comportant au moins deux essieux, **caractérisé en ce qu'**il comporte :

    - des moyens (22, 24) pour estimer une condition de couple et/ou d'effort de traction par exécution d'un modèle dynamique de liaison au sol comme une parabole d'équiadhérence longitudinale et transversale ;
    - des moyens pour estimer (26) une condition limite de couple et/ou d'effort de traction dans un état de virage comportant un moyen (26) pour calculer un moment de lacet maximal autorisé ($M_{Fxmax}$), déterminé en fonction de la situation de conduite, sur la base des données dynamiques du véhicule et de la volonté du conducteur ; et
    - des moyens (28) pour limiter un couple et/ou un effort de traction entre plusieurs roues du véhicule en fonction de la condition estimée par les moyens (22, 24) pour estimer une condition de couple et/ou d'effort de traction et de la condition limite élaborée par les moyens (26) pour estimer une condition limite de couple et/ou d'effort de traction dans un état de virage.

2.  Dispositif (40) selon la revendication 1, **caractérisé en ce que** les moyens pour estimer une condition de couple et/ou d'effort de traction comportent un moyen (22) pour estimer des efforts verticaux ($Fzij$) en tenant compte de la charge statique (g), de l'accélération tangentielle ($a_t$), et de l'accélération centripète ($a_c$).

3.  Dispositif (40) selon la revendication 2, **caractérisé en ce que** les moyens pour estimer une condition de couple et/ou d'effort de traction comportent un moyen (24), pour calculer des valeurs optimales d'efforts longitudinaux de traction des roues du véhicule, (Fxij_opt), telles que :

    - pour chaque roue (ij), un potentiel de traction ($\eta_{ij\mu}$), défini par le rapport d'un effort longitudinal ($Fxij$) sur un effort vertical ($Fzij$), est égal à un potentiel de traction ($\mu$) voisin de celui des quatre roues (ij), multiplié par un coefficient ($\eta_{ij}$) proche de un qui permet de régler une petite différence de potentiels ($\mu$) entre les roues intérieures et les roues extérieures dans un virage et entre les roues avant et arrière de façon à assurer que les roues avant patineront avant les roues arrières et que les roues intérieures patineront avant les roues extérieures ;
    - l'effort de traction total est égal à la demande du conducteur ($F_T$).

4.  Dispositif (40) selon l'une quelconque des revendications précédentes , **caractérisé en ce que** les moyens pour estimer une condition limite de couple et/ou d'effort de traction dans un état de virage coopèrent avec un moyen (28) pour calculer des efforts longitudinaux limités en fonction du moment de lacet maximal autorisé ($M_{Fxmax}$) qui comporte un moyen pour stocker des coefficients limitatifs ($\alpha$, $\beta$) des efforts longitudinaux de manière à modifier la répartition des efforts de traction appliqués à chaque roue (ij).

5.  Dispositif (40) selon la revendication 4, **caractérisé en ce qu'**il comporte des moyens (23) pour répartir les couples ou efforts de traction limités (Fxij_lim) aux roues du véhicule qui comportent des moyens pour piloter des moteurs électriques solidaires de chaque roue (ij), de manière à entraîner chaque roue (ij) avec la consigne d'effort (Fxij_lim) transmise par le moyen de pilotage.

6.  Dispositif (40) selon la revendication 4, **caractérisé en ce qu'**il comporte des moyens pour répartir les couples ou efforts de traction limités (Fxij_lim) aux roues (ij) du véhicule qui comportent un moyen pour piloter un différentiel piloté équipant chaque train (30, 32) du véhicule de manière à distribuer les efforts longitudinaux limités (Fxij_lim) à la roue droite et à la roue gauche du train donné.

**7.** Dispositif (40) selon l'une quelconque des revendications précédentes, **caractérisé en ce qu'**il s'applique à un véhicule hybride à quatre roues motrices comportant au moins un moteur thermique (34) entraînant un train avant (30) du véhicule et au moins une machine électrique (36) entraînant le train arrière (32) du véhicule et pouvant fonctionner soit en moteur soit en générateur pour recharger un élément de stockage d'énergie (38).

**Patentansprüche**

**1.** Vorrichtung (40) zum Verteilen eines Traktionsdrehmoments und/oder einer Traktionskraft an die Räder eines Kraftfahrzeugs des Typs, der wenigstens zwei Achsen aufweist, **dadurch gekennzeichnet, dass** sie Folgendes umfasst:

- Mittel (22, 24) zum Schätzen eines Zustands des Traktionsdrehmoments und/oder der Traktionskraft durch Ausführen eines dynamischen Modells für die Verbindung mit dem Boden wie etwa einer Parabel mit gleicher longitudinaler und transversaler Haftung;
- Mittel (26) zum Schätzen eines Grenzzustands des Traktionsdrehmoments und/oder der Traktionskraft in einem Kurvenfahrtzustand, die ein Mittel (26) zum Berechnen eines maximalen zulässigen Giermoments ($M_{FXmax}$), das als Funktion der Fahrsituation anhand der dynamischen Daten des Fahrzeugs und der Absicht des Fahrers bestimmt wird, enthalten; und
- Mittel (28) zum Begrenzen eines Traktionsdrehmoments und/oder einer Traktionskraft zwischen mehreren Rädern des Fahrzeugs als Funktion des geschätzten Zustands durch die Mittel (22, 24) zum Schätzen eines Zustands des Traktionsdrehmoments und/oder der Traktionskraft und des Grenzzustands, der von den Mitteln (26) zum Schätzen eines Grenzzustands des Traktionsdrehmoments und/oder der Traktionskraft in einem Kurvenfahrtzustand entwickelt wird.

**2.** Vorrichtung (40) nach Anspruch 1, **dadurch gekennzeichnet, dass** die Mittel zum Schätzen eines Zustands des Traktionsdrehmoments und/oder der Traktionskraft ein Mittel (22) umfassen, um vertikale Kräfte (Fzij) unter Berücksichtigung der statischen Last (g), der Tangentialbeschleunigung ($a_t$) und der Zentripedalbeschleunigung ($a_c$) zu schätzen.

**3.** Vorrichtung (40) nach Anspruch 2, **dadurch gekennzeichnet, dass** die Mittel zum Schätzen eines Zustands des Traktionsdrehmoments und/oder der Traktionskraft ein Mittel (24) umfassen, um optimale Werte der longitudinalen Traktionskräfte der Räder des Fahrzeugs (Fxij_opt) zu berechnen, derart, dass:

- für jedes Rad (ij) ein Traktionspotential ($\eta_{ij}\mu$), das durch das Verhältnis einer longitudinalen Kraft (Fxij) zu einer vertikalen Kraft (Fzij) gleich einem Traktionspotential ($\mu$) in der Nähe jenes der vier Räder (ij), multipliziert mit einem Koeffizienten ($\eta_{ij}$) in der Nähe von eins, ist, was ermöglicht, eine kleine Differenz von Potentialen ($\mu$) zwischen den inneren Rädern und den äußeren Rädern bei einer Kurvenfahrt und zwischen den Vorderrädern und den Hinterrädern zu regulieren, derart, dass sichergestellt ist, dass die Vorderräder vor den Hinterrädern einen Schlupf aufweisen und dass die inneren Räder vor den äußeren Rädern einen Schlupf aufweisen;
- die gesamte Traktionskraft gleich der Anforderung des Fahrers ($F_T$) ist.

**4.** Vorrichtung (40) nach einem der vorhergehenden Ansprüche, **dadurch gekennzeichnet, dass** die Mittel zum Schätzen eines Grenzzustands des Traktionsdrehmoments und/oder der Traktionskraft in einem Kurvenfahrzustand mit einem Mittel (28) zum Berechnen der longitudinalen Kräfte, die als Funktion des maximalen zulässigen Giermoments ($M_{Fxmax}$) begrenzt sind, zusammenwirken, das seinerseits ein Mittel zum Speichern von Grenzkoeffizienten ($\alpha$, $\beta$) der longitudinalen Kräfte umfasst, derart, dass die Verteilung der auf jedes Rad (ij) ausgeübten Traktionskräfte modifiziert wird.

**5.** Vorrichtung (40) nach Anspruch 4, **dadurch gekennzeichnet, dass** sie Mittel (23) zum Verteilen der begrenzten Traktionsdrehmomente oder Traktionskräfte (Fxij_lim) auf die Räder des Fahrzeugs umfasst, die Mittel umfassen, um Elektromotoren, die mit jedem Rad (ij) fest verbunden sind, vorzusteuern, derart, dass jedes Rad (ij) mit einem Kraftsollwert (Fxij_lim), der von dem Vorsteuermittel übertragen wird, angetrieben wird.

**6.** Vorrichtung (40) nach Anspruch 4, **dadurch gekennzeichnet, dass** sie Mittel umfasst, um die Grenztraktionsdrehmomente oder Grenztraktionskräfte (Ffxij_lim) auf die Räder (ij) des Fahrzeugs zu verteilen, die ein Mittel umfassen, um ein vorgesteuertes Differential vorzusteuern, mit dem jede Achse (30, 32) des Fahrzeugs ausgerüstet ist, derart, dass die begrenzten longitudinalen Kräfte (Fxij_lim) auf das rechte Rad und das linke Rad der gegebenen Achse verteilt werden.

**7.** Vorrichtung (40) nach einem der vorhergehenden Ansprüche, **dadurch gekennzeichnet, dass** sie auf ein Hybridfahrzeug mit vier angetriebenen Rädern angewendet wird, das wenigstens eine Brennkraftmaschine (34), die eine Vorderachse (30) des Fahrzeugs antreibt, und wenigstens eine elektrische Maschine (36), die die Hinterachse (32) des Fahrzeugs antreibt und entweder als Motor oder als Generator, um ein Element (38) zum Speichern von Energie wiederaufzuladen, arbeiten kann, umfasst.

**Claims**

**1.** Device (40) for apportioning a traction torque and/or a traction force to the wheels of a motor vehicle, of the type comprising at least two axles, **characterized in that** it comprises:

- means (22, 24) for estimating a torque condition and/or traction force by executing a dynamic model of the ground contact system as a parabola of equal longitudinal and transverse grip;
- means (26) for estimating a limit condition for traction torque and/or force in a cornering situation comprising a means (26) for calculating a maximum permitted yawing moment ($M_{FXmax}$), which is determined as a function of the driving situation, on the basis of dynamic vehicle data and of the wishes of the driver; and
- means (28) for limiting a traction torque and/or force between several wheels of the vehicle as a function of the condition estimated by the means (22, 24) for estimating a traction torque and/or force condition and of the limit condition formulated by the means (26) for estimating a limit traction torque and/or force condition in a cornering situation.

**2.** Device (40) according to Claim 1, **characterized in that** the means for estimating a traction torque and/or force condition comprise a means (22) for estimating vertical forces (Fzij) by taking the static force (g), the tangential acceleration ($a_t$) and the centripetal acceleration ($a_c$) into consideration.

**3.** Device (40) according to Claim 2, **characterized in that** the means for estimating a traction torque and/or force condition comprise a means (24) for calculating optimum values for longitudinal traction forces of the wheels of the vehicle (Fxij_opt), which are such that:

- for each wheel (ij), a traction potential ($\eta_{ij\mu}$), defined by the ratio of a longitudinal force (Fxij) to a vertical force (Fzij), is equal to a traction potential ($\mu$) similar to that of the four wheels (ij), multiplied by a coefficient ($\eta_{ij}$) close to one which makes it possible to set a small difference in potentials ($\mu$) between the wheels on the inside and the wheels on the outside of a bend and between the front and rear wheels so as to ensure that the front wheels will slip before the rear wheels and that the inside wheels will slip before the outside wheels;
- the total traction force is equal to the demand by the driver ($F_T$).

**4.** Device (40) according to any one of the preceding claims, **characterized in that** the means for estimating a limit traction torque and/or force condition in a cornering situation collaborate with a means (28) for calculating limited longitudinal forces as a function of the maximum permitted yawing moment ($M_{Fxmax}$) which comprises a means for storing limiting coefficients ($\alpha$, $\beta$) for the longitudinal forces so as to modify the apportioning of the traction forces applied to each wheel (ij).

**5.** Device (40) according to Claim 4, **characterized in that** it comprises means (23) for apportioning the limited traction torques or forces (Fxij_lim) to the wheels of the vehicle which comprise means for controlling the electric motors attached to each wheel (ij) so as to drive each wheel (ij) with the force setpoint (Fxij_lim) transmitted by the control means.

**6.** Device (40) according to Claim 4, **characterized in that** it comprises means for apportioning the limited traction torques or forces (Fxij_lim) to the wheels (ij) of the vehicle which comprise a means for controlling a controlled differential with which each axle set (30, 32) of the vehicle is equipped so as to distribute the limited longitudinal forces (Fxij_lim) to the right wheel and the left wheel of the given axle set.

**7.** Device (40) according to any one of the preceding claims, **characterized in that** it applies to a four-wheel-drive hybrid vehicle comprising at least a combustion engine (34) driving a front axle set (30) of the vehicle and at least an electric machine (36) driving the rear axle set (32) of the vehicle and able to operate either as a motor or as a generator for recharging an energy storage element (38).

**Fig. 1**

L,x ← ⊙ V,z

T,y

**Fig. 2**

Volonté conducteur $F_{xij}$

Charge statique

$a_t, a_c$

$F_{zar}$

Accel lacet

Vitesses roues $\omega_{ij}$

Estimation Charges dynamiques aux roues

$F_{zij}$

Variation du moment de lacet maxi autorisé en fonction de la situation de conduite

$M_{Fxmax}$

Uniformisation et optimisation des potentiels

$F_{xij\text{-}opt}$

Limitation des potentiels en fonction du moment du lacet

$F_{xij\text{-}lim}$

Situation de conduite.

**RÉFÉRENCES CITÉES DANS LA DESCRIPTION**

**Documents brevets cités dans la description**

- EP 1486391 A
- EP 1197409 A2
- DE 19523354 A1